# EUROPEAN PATENT APPLICATION

(11) **EP 4 017 075 A1**
(43) Date of publication of application: **22.06.2022**
(21) Application number: 20852173.2
(22) Date of filing: 03.07.2020
(51) Int. Cl.: H04W 24/04

(54) **INFORMATION TRANSMISSION METHOD AND APPARATUS**

(30) Priority: 14.08.2019 CN 201910750955
(71) Applicant: Datang Mobile Communications Equipment Co., Ltd., Beijing 100085 (CN)
(72) Inventor: YAN, Nan, Beijing 100085 (CN); FAN, Jiangsheng, Beijing 100085 (CN)
(74) Representative: Körfer, Thomas
(86) International application number: PCT/CN2020/100221
(87) International publication number: WO 2021/027432

(57) **Abstract**

Disclosed are an information transmission method and apparatus, used for recording, by a UE, a radio link related problem that has occurred and reporting same to a network side after the UE is successfully handed over to a target cell, so that the network side can further improve robustness on the basis of SON handover optimization, such as existing too early handover. At a terminal side, the information transmission method provided by the embodiments of the present disclosure comprises: after a terminal is successfully handed over to a target cell, recording information related to a radio link problem; and reporting the information related to the radio link problem to a network side.

## Description

### Cross-Reference of Related Applications

The present disclosure claims the priority from Chinese Patent Application No. 201910750955.1, filed with the China National Intellectual Property Administration on August 14, 2019 and entitled "Information Transmission Method and Apparatus", which is hereby incorporated by reference in its entirety.

### Field

The disclosure relates to the field of communication technologies, and particularly to an information transmission method and apparatus.

### Background

In the existing handover-related statistical design, for too early handover and handover to a wrong cell, the relevant processes and parameters are recorded to thereby determine the handover problem only when the radio link failure occurs. However, for the case when the indication of lower-layer out-of-synchronization more than once occurs or T310 is turned on but does not expire, there is no relevant record due to no actual Radio Link Failure (RLF) in the end. However, these cases belong to a critical scenario of too early handover/handover to a wrong cell, that is, when a User Equipment (UE) is in these cases, the RLF may actually be triggered once the channel environment changes slightly.

### Summary

Embodiments of the disclosure provide an information transmission method and apparatus, so as to record the radio link related problems that occurred and report them to the network side by a UE after the UE is successfully handed over to a target cell, so that the network side can further enhance the robustness on the basis of existing SON handover optimization such as too early handover.

On the terminal side, an information transmission method provided by an embodiment of the disclosure includes:
recording information related to a radio link problem after a terminal is successfully handed over to a target cell; and
reporting the information related to the radio link problem to a network side.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the information related to the radio link problem is recorded in response to without actual occurrence of Radio Link Failure, RLF.

In some embodiments, the information related to the radio link problem is recorded only within preset time after the terminal is handed over to the target cell.

In some embodiments, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem in response to receiving an request issued by the network side, where the information related to the radio link problem includes source cell information before the terminal is handed over to the target cell.

Correspondingly, on the network side, for example, in a target cell, an information transmission method provided by an embodiment of the disclosure includes:
receiving information related to a radio link problem reported by a terminal, where the information related to the radio link problem is recorded by the terminal after being successfully handed over to a target cell; and
sending the information related to the radio link problem to a source cell before cell handover of the terminal, for the source cell to adjust cell handover parameters.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

On the network side, for example, in a source cell, an information transmission method provided by an embodiment of the disclosure includes:
receiving information related to a radio link problem reported by a terminal, where the information related to the radio link problem is recorded by the terminal after being successfully handed over to a target cell; and
adjusting cell handover parameters by using the information related to the radio link problem.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

On the terminal side, an information transmission apparatus provided by an embodiment of the disclosure includes:
a memory, configured to store program instructions;
a processor, configured to invoke the program instructions stored in the memory, and perform, according to an obtained program, the process of:
   recording information related to a radio link problem after a terminal is successfully handed over to a target cell; and
   reporting the information related to the radio link problem to a network side.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the information related to the radio link problem is recorded in response to without actual occurrence of Radio Link Failure, RLF.

In some embodiments, the information related to the radio link problem is recorded only within preset time after the terminal is handed over to the target cell.

In some embodiments, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem in response to receiving an request issued by the network side, where the information related to the radio link problem includes source cell information before the terminal is handed over to the target cell.

On the network side, for example, in a target cell, an information transmission apparatus provided by an embodiment of the disclosure includes:
a memory, configured to store program instructions;
a processor, configured to invoke the program instructions stored in the memory, and perform, according to an obtained program, the process of:
   receiving information related to a radio link problem reported by a terminal, where the information related to the radio link problem is recorded by the terminal after being successfully handed over to a target cell; and
   sending the information related to the radio link problem to a source cell before cell handover of the terminal, for the source cell to adjust cell handover parameters.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

On the network side, for example, in a source cell, an information transmission apparatus provided by an embodiment of the disclosure includes:
a memory, configured to store program instructions;
a processor, configured to invoke the program instructions stored in the memory, and perform, according to an obtained program, the process of:
   receiving information related to a radio link problem reported by a terminal, where the information related to the radio link problem is recorded by the terminal after being successfully handed over to a target cell; and
   adjusting cell handover parameters by using the information related to the radio link problem.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the processor is further configured to:
send the information related to the radio link problem to a source cell before cell handover of the terminal, for the source cell to adjust cell handover parameters.

On the terminal side, another information transmission apparatus provided by an embodiment of the disclosure includes:
a recording unit configured to record information related to a radio link problem after a terminal is successfully handed over to a target cell; and
a reporting unit configured to report the information related to the radio link problem to a network side.

On the network side, another information transmission apparatus provided by an embodiment of the disclosure includes:
a receiving unit configured to receive information related to a radio link problem reported by a terminal, where the information related to the radio link problem is recorded by the terminal after being successfully handed over to a target cell; and
a sending unit configured to send the information related to the radio link problem to a source cell before cell handover of the terminal, for the source cell to adjust cell handover parameters.

On the network side, another information transmission apparatus provided by an embodiment of the disclosure includes:
a receiving unit, configured to receive information related to a radio link problem reported by a terminal, where the information related to the radio link problem is recorded by the terminal after being successfully handed over to a target cell; and
an adjustment unit, configured to adjust cell handover parameters by using the information related to the radio link problem.

In some embodiments, the apparatus further includes:
a sending unit, configured to send the information related to the radio link problem to a source cell before cell handover of the terminal, for the source cell to adjust cell handover parameters.

Another embodiment of the disclosure provides a computing device, which includes a memory and a processor, where the memory is configured to store the program instructions, and the processor is configured to invoke the program instructions stored in the memory and perform any one of the above-mentioned methods in accordance with the obtained program.

Another embodiment of the disclosure provides a computer storage medium storing the computer executable instructions which are configured to cause the computer to perform any one of the above-mentioned methods.

### Brief Description of the Drawings

In order to illustrate the technical solutions in the embodiments of the disclosure more clearly, the accompanying figures which need to be used in describing the embodiments will be introduced below briefly. Obviously the accompanying figures described below are only some embodiments of the disclosure, and other accompanying figures can also be obtained by those ordinary skilled in the art according to these accompanying figures without creative labor.
Fig. 1 is a schematic diagram of too early handover in a system;
Fig. 2 is a schematic diagram of radio link failure due to timeout of T310;
Fig. 3 is a schematic diagram of the critical decision and report of too early handover, provided by an embodiment of the disclosure;
Fig. 4 is a schematic diagram of the critical decision and report of handover to a wrong cell, provided by an embodiment of the disclosure;
Fig. 5 is a schematic flowchart of an information transmission method on the terminal side, provided by an embodiment of the disclosure;
Fig. 6 is a schematic flowchart of an information transmission method of a target cell on the network side, provided by an embodiment of the disclosure;
Fig. 7 is a schematic flowchart of an information transmission method of a source cell on the network side, provided by an embodiment of the disclosure;
Fig. 8 is a structural schematic diagram of an information transmission apparatus on the terminal side, provided by an embodiment of the disclosure;
Fig. 9 is a structural schematic diagram of an information transmission apparatus of a target cell on the network side, provided by an embodiment of the disclosure;
Fig. 10 is a structural schematic diagram of an information transmission apparatus of a source cell on the network side, provided by an embodiment of the disclosure;
Fig. 11 is a structural schematic diagram of another information transmission apparatus on the terminal side, provided by an embodiment of the disclosure;
Fig. 12 is a structural schematic diagram of another information transmission apparatus of a target cell on the network side, provided by an embodiment of the disclosure;
Fig. 13 is a structural schematic diagram of another information transmission apparatus of a source cell on the network side, provided by an embodiment of the disclosure.

### Detailed Description of the Embodiments

The technical solutions in embodiments of the disclosure will be described clearly and completely below in combination with the accompanying drawings in embodiments of the disclosure. Obviously the described embodiments are only a part of embodiments of the disclosure but not all embodiments. Based upon embodiments in the disclosure, all of other embodiments obtained by those ordinary skilled in the art without creative work pertain to the protection scope of the disclosure.

Regarding the mobility optimization of Self Organization Network (SON).

Too early handover: usually the base station initiates the handover when the neighboring cell's signal is not good enough or not stable enough.

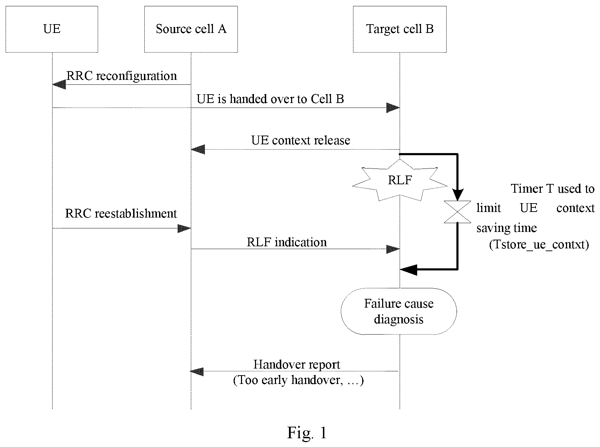

There are mainly the following cases:
Case 1: in a system, after a source cell issues a handover command, the UE fails to switch to a target cell due to the poor signal quality in the target cell, and the UE initiates Radio Resource Control (RRC) reestablishment and returns to the source cell. In this scenario, the UE fails to access randomly or send a message (msg) 3 during handover to a new cell, resulting in handover failure, and then the UE initiates RRC connection reestablishment in the source cell. In this scenario, the source base station may judge by itself, and no interface message is required;
Case 2: referring to Fig. 1, in a system, although the UE has successfully handed over to the target cell, the downlink out-of-synchronization immediately causes the RLF, and then the RRC connection reestablishment is initiated in the source cell. The source cell sends an RLF indication to the target cell, and the target cell judges whether the handover is premature according to the indication, the timer T (Tstore_ue_contxt) used to limit the UE context saving time and other factors; if so, how to send the handover report to the source cell, the too early handover indication and the related information are carried;
Case 3: for inter-system, if the RLF occurs soon after the UE undergoes the inter-radio access technology handover (inter-RAT handover) from a source cell to a new system and then the source system is selected to reestablish a connection, then this is the inter-system too early handover.

Regarding handover to a wrong cell.

There are mainly several following types of handover to the wrong cell:
Case 1: the RLF occurs soon after the UE is handed over from the source cell to the target cell, and then a cell that is neither the source cell nor the target cell is selected to reestablish a connection; or
Case 2: the UE fails to hand over, and then a cell that is neither the source cell nor the target cell is selected to reestablish a connection.

Regarding radio link failure.

There may be several reasons for radio link failure in the Long Term Evolution (LTE) system:
the timer T310 expires;
the timer T312 expires;
the Media Access Control (MAC) reports the random access problem under certain conditions;
the RLC reports the maximum number of retransmissions for Signalling Radio Bearers (SRBs) or Data Radio Bearers (DRBs), etc. under certain conditions.

Here, the timeout of T310 and T312 may generally correspond to the downlink coverage problem, and the cases that the MAC reports the random access problem and the Radio Link Control (RLC) protocol reaches the maximum number of retransmissions may correspond to the uplink coverage problem.

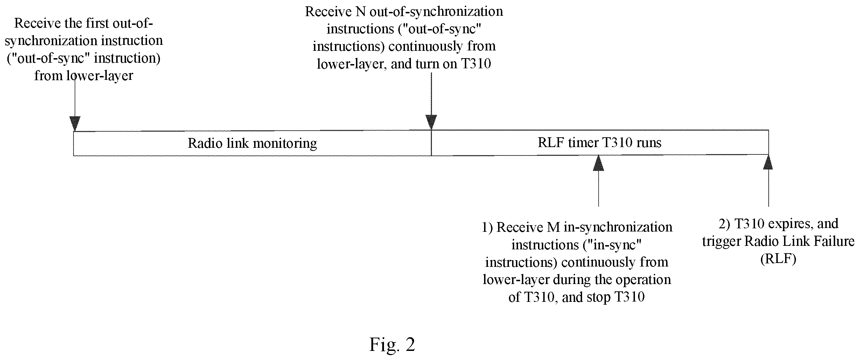

For example, referring to Fig. 2, for the timeout of T310, if the RRC of the UE receives N (for example, the value of N310) out-of-synchronization instructions ("out-of-sync" instructions) continuously from the lower-layer, the RLF timer T310 is turned on, and then:
if M (for example, the value of N311) in-synchronization instructions ("in-sync" instructions) are continuously received during the operation of T310, it is considered that the out-of-synchronization problem has been solved, and the timer T310 is stopped;
if M (for example, the value of N311) "in-sync" instructions cannot be received continuously during the operation of T310, the timer T310 will eventually expires, and it is considered that the radio link cannot be maintained and a radio link failure has occurred. Subsequently, according to the specific conditions, the UE may select a new cell to initiate the reestablishment process, or enter the idle state.

For example, for the timeout of T312, it is an enhancement of the radio link failure in the heterogeneous network.

If T310 has been turned on and the UE evaluates and organizes a measurement report at this time, the UE starts the timer T312 while sending the measurement report. The total length of T312 is the maximum allowable time set by the network from the moment at which the UE sends the measurement report to the moment at which the UE should receive a handover command. If T312 expires, the UE may directly generate the RLF without waiting for T310 to expire. If T310 is stopped because the conditions are met, then T312 is also stopped.

In summary, in the existing handover-related statistical design, for the case 2/3 of too early handover and the case 1 of handover to the wrong cell described above, the relevant processes and parameters are recorded to thereby determine the handover problem only when the radio link failure occurs. However, for the case when the indication of lower-layer out-of-synchronization more than once occurs or T310 is turned on but does not expire, there is no relevant record due to no actual RLF in the end. However, these cases belong to a critical scenario of too early handover/handover to a wrong cell, that is, when a UE is in these cases, the RLF may actually be triggered once the channel environment changes slightly. Therefore, by recording the information of these cases, the configuration parameters related to the handover may be optimized, and the occurrence of too early handover or handover to the wrong cell may be further avoided.

Embodiments of the disclosure provide an information transmission method and apparatus, so as to record the radio link related problems that occurred and report them to the network side by a UE after the UE is successfully handed over to a target cell, so that the network side can further enhance the robustness on the basis of existing SON handover optimization such as too early handover.

Here, the method and apparatus are based on the same application concept. Since the principle of solving the problem in the method is similar to that in the apparatus, the implementations of the apparatus and method can refer to each other, and the repeated description thereof will be omitted.

The technical solutions provided by embodiments of the disclosure may be applicable to various systems, especially 5G systems. For example, the applicable systems may be: Global System of Mobile communication (GSM) system, Code Division Multiple Access (CDMA) system, Wideband Code Division Multiple Access (WCDMA) system, General Packet Radio Service (GPRS) system, LTE system, LTE Frequency Division Duplex (FDD) system, LTE Time Division Duplex (TDD) system, Universal Mobile Telecommunication System (UMTS), Worldwide interoperability for Microwave Access (WiMAX) system, 5th generation wireless (5G) system and 5G New Radio (5G NR) system, etc. These systems all include terminal devices and network devices.

The terminal device involved in embodiments of the disclosure may be a device for providing the voice and/or data connectivity to the user, a handheld device with the wireless connection function, or other processing device connected to the wireless modem. In different systems, the terminal device may have different names. For example, in a 5G system, the terminal device may be referred to as UE. The wireless terminal device can communicate with one or more core networks via the Radio Access Network (RAN), and the wireless terminal device can be a mobile terminal, such as a mobile telephone (or called "cellular" telephone), and a computer with the mobile terminal, for example, can be a portable, pocket, handheld, computer built-in or vehicle-carried mobile device, and they exchange the voice and/or data with the radio access network. For example, Personal Communication Service (PCS) telephone, cordless telephone, Session Initiation Protocol (SIP) telephone, Wireless Local Loop (WLL) station, Personal Digital Assistant (PDA) and other devices. The wireless terminal device can also be called system, subscriber unit, subscriber station, mobile station, mobile, remote station, access point, remote terminal, access terminal, user terminal, user agent, user device, which is not limited in the embodiments of the disclosure.

The network device involved in embodiments of the disclosure may be a base station, which may include a plurality of cells. Depending on specific application scenarios, the base station may also be called access point, or may refer to the device in the access network communicating with the wireless terminal via one or more sectors over the air interface or other names. The network device may be used to perform the inter-conversion between the received air frame and Internet Protocol (IP) packet, and used as the router between the wireless terminal device and the rest of the access network, where the rest of the access network may include IP networks. The network device can further coordinate the attribute management of the air interface. For example, the network device involved in the embodiments of the disclosure can be a network device (Base Transceiver Station (BTS)) in the GSM system or CDMA system, or can be a network device (NodeB) in the WCDMA system, or can be an evolutional network device (evolutional Node B (eNB or e-NodeB)) in the LTE system, a 5G base station in the 5G network architecture (next generation system), or can be a Home evolved Node B (HeNB), a relay node, femto, pico, etc., which is not limited in the embodiments of the disclosure.

Embodiments of the disclosure will be described below in detail with reference to the drawings of the specification. It should be noted that the showing order of embodiments of the disclosure only represents the sequential order of embodiments, but does not represent the pros and cons of the technical solutions provided by embodiments.

An embodiment of the disclosure provides a method for optimizing handover parameters, where a UE records the radio link related problems that occurred and reports them to the network side after the UE is successfully handed over to a target cell, so that the network side can further enhance the robustness on the basis of existing SON handover optimization such as too early handover.

When the UE is successfully handed over to the target cell, it records the possible problems related to the radio link and reports them to the network side.

The possible problems related to the radio link include:
the switch-on time of a failure timer (for example, T310) of the radio link;
a count value of a failure counter (for example, N310) of the radio link; and
the switch-on time and a reason for suspension of a handover measurement timer (for example, T312) related to the radio link.

In some embodiments, the switch-on time of the failure timer of the radio link may include one or more of:
the total length of time during which the failure timer of the radio link is turned on;
the relative time point at which the failure timer of the radio link starts, where the corresponding reference time point is the time point at which the handover succeeds; or
the absolute time point at which the failure timer of the radio link starts.

In some embodiments, the information related to the radio link problem is recorded in response to without actual occurrence of RLF.

In some embodiments, these possible problem information related to the radio link are recorded only within a certain period of time after the UE is handed over to the target network side (for example, starting a timer), and there is no need to record the problems related to the radio link that occur after the timer expires.

In some embodiments, the reporting method may include:
the UE sends the record of the problems related to the radio link directly through uplink signaling; and
the UE sends an available indication in the uplink signaling, and then reports the specific record of the problems related to the radio link after the network sends a request; and at this time, the content reported by the UE may need to carry the information of the source cell before the handover.

In some embodiments, after receiving the record of the problems related to the radio link, the network side sends it to the source cell before the handover of the UE, for the source cell to adjust the handover parameters.

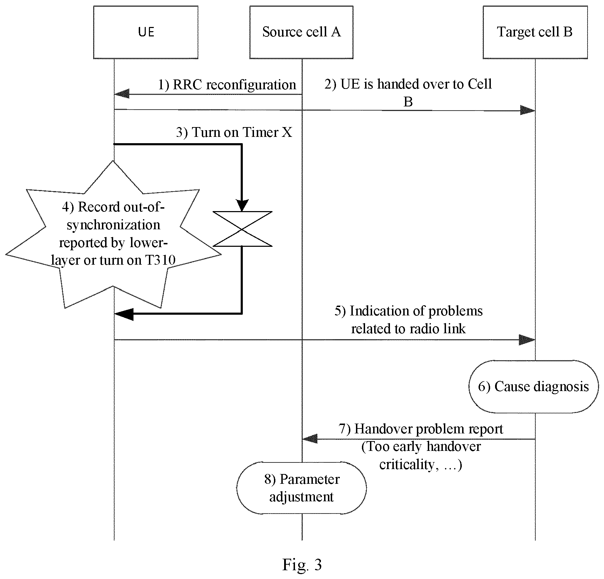

Embodiment 1: the critical process of intra-system too early handover, referring to Fig. 3, includes the following steps.

Step 1)-Step 2): a UE is successfully handed over from a source cell A to a target cell B.

Step 3): the UE starts a Timer X of the problems related to the radio link after accessing the target cell B successfully.

Step 4): if the UE RRC layer receives the out-of-synchronization instruction reported by the lower-layer before the Timer X expires, then the possible record content is as follows:
- If a synchronization instruction is received after N'out-of-synchronization instructions are received consecutively, then the number of times recorded by a failure counter of the radio link is recorded; where N'is a preset natural number greater than or equal to 1.
- If a failure timer of the radio link is turned on after the number of times recorded by the failure counter of the radio link meets the condition, then:
   if the failure timer of the radio link does not expire and a specified number of consecutive synchronization instructions are received, then the UE will record the length of time during which the failure timer of the radio link is turned on while stopping the failure timer of the radio link;
   if the failure timer of the radio link expires, then the RLF will be triggered, and the above recorded content may be directly deleted (because the RLF process will be followed directly).

Step 5): if the UE saves the record of the problems related to the radio link when the Timer X expires, then the UE may report to the network side. The reporting behavior may be:
a) the UE sends the record of the problems related to the radio link directly through uplink signaling;
b) the UE sends an available indication in the uplink signaling, and then reports the specific record of the problems related to the radio link after the network sends a request; and at this time, the content reported by the UE may need to carry the information of the source cell before the handover.

Step 6): In some embodiments, the target cell B determines the "too early handover criticality" problem.

Step 7): the network side returns the received record of the problems related to the radio link to the source cell A, where the "too early handover criticality" indication may be carried, and the return method may be:
- if the UE sends the record of the problems related to the radio link directly through uplink signaling, then the cell B that receives the content is the target cell to which the UE is handed over, may save the information of the UE's source cell, and may forward the record of the problems related to the radio link to the handover source cell A of the UE;
- if the UE firstly sends an available indication in the uplink signaling and then reports it in response to a network request, the cell that receives the record of the problems related to the radio link may not be one of the source and target cells before and after the handover of the UE, and then the receiving network side needs to send the record of the problems related to the radio link to the source cell according to the source cell information given in the record of the problems related to the radio link.

Step 8): after receiving the record of the problems related to the radio link, the source cell A may use it to adjust the measurement/handover related parameters.

Embodiment 2: the critical process of inter-system too early handover.

The critical process of inter-system too early handover is similar to the critical process of intra-system too early handover, except that the network side may send the handover problem report back to the source cell of the source system before the handover of the UE through the Remote Method Invocation (RIM) process in step 7).

The source cell in step 8) is used to adjust the inter-RAT related measurement/handover decision parameters.

Other steps are the same as those in the previous embodiment, and will not be repeated here.

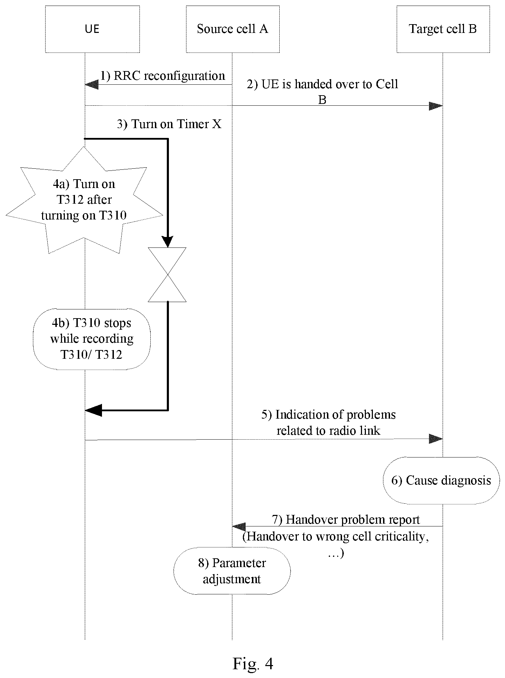

Embodiment 3: the processing flow of handover to wrong cell criticality, referring to Fig. 4, includes the following steps.

Step 1)-Step 3) are the same as those in the Embodiment 1.

In step 4), if the UE RRC layer receives the out-of-synchronization instruction reported by the lower-layer before the Timer X expires, and the failure timer (for example, T310) of the radio link has been turned on:
- If a handover measurement timer (for example, T312) related to the radio link is turned on;

The turning-on of this timer indicates that the UE has already evaluated and organized a measurement report for reporting within a short time after handover to the cell, which may be caused by handover to an inappropriate cell (handover to wrong cell criticality);

If the suspension of T312 is caused by the suspension of T310, the length of time during which T312 is turned on may be recorded;

If the suspension of T312 is caused by the receipt of a handover command, the length of time during which T312 is turned on may be recorded;

At the same time, the reason for T312 suspension may be recorded, such as T310 suspension, or handover, etc.;

If the timer T312 expires, then the RLF will be triggered, and the above recorded content may be directly deleted (because the RLF process will be followed directly).

Step 5): if the UE saves the record of the problems related to the handover measurement timer when the Timer X expires, then the UE may report to the network side.

The subsequent steps are the same as those in the Embodiment 1. But, in step 7), the network side returns the received record of the problems related to the handover measurement timer to the source cell A, where the "handover to wrong cell criticality" indication and the related record information may be carried.

The recording and reporting/returning content in Embodiment 3 does not conflict with that in Embodiment 1/2, and they can be performed at the same time.

When the UE is successfully handed over to the target cell, it records the possible problems related to the radio link within a certain period of time and reports them to the network side.

The network side that receives the problems related to the radio link returns the problems related to the radio link to the source network side of the UE handover.

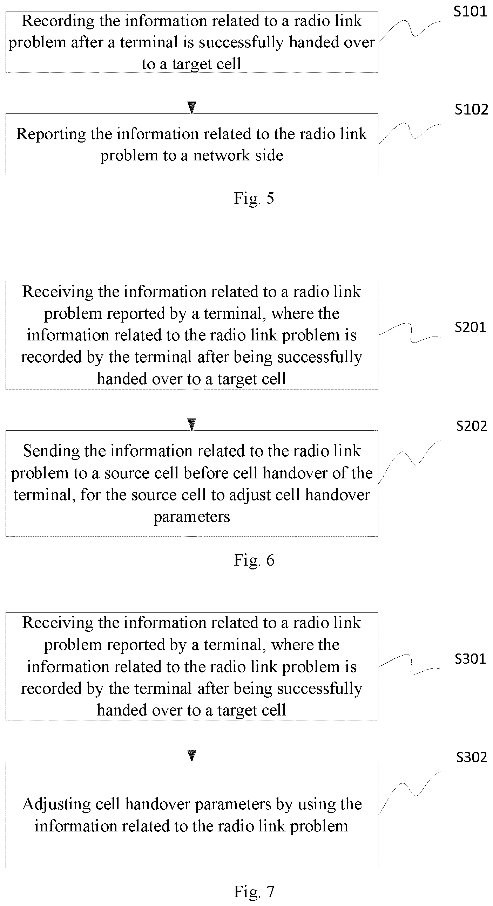

In summary, referring to Fig. 5, on the terminal side, an information transmission method provided by an embodiment of the disclosure includes:
S101: recording the information related to a radio link problem after a terminal is successfully handed over to a target cell; and
S102: reporting the information related to the radio link problem to a network side.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the information related to the radio link problem is recorded in response to without actual occurrence of RLF.

In some embodiments, the information related to the radio link problem is recorded only within preset time after the terminal is handed over to the target cell.

In some embodiments, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem when receiving an request issued by the network side, where the information related to the radio link problem includes source cell information before the terminal is handed over to the target cell.

Correspondingly, on the network side, referring to Fig. 6, for example, in a target cell, an information transmission method provided by an embodiment of the disclosure includes:
S201: receiving the information related to a radio link problem reported by a terminal, where the information related to the radio link problem is recorded by the terminal after being successfully handed over to a target cell; and
S202: sending the information related to the radio link problem to a source cell before cell handover of the terminal, for the source cell to adjust cell handover parameters.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

On the network side, referring to Fig. 7, for example, in a source cell, an information transmission method provided by an embodiment of the disclosure includes:
S301: receiving the information related to a radio link problem reported by a terminal, where the information related to the radio link problem is recorded by the terminal after being successfully handed over to a target cell;
For example, this step may be that the source cell receives the information related to the radio link problem reported by the terminal sent by the target cell. Of course, it may also be that the source cell receives the information related to the radio link problem reported by the terminal sent by other cells (not limited to the target cell);
S302: adjusting cell handover parameters by using the information related to the radio link problem.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

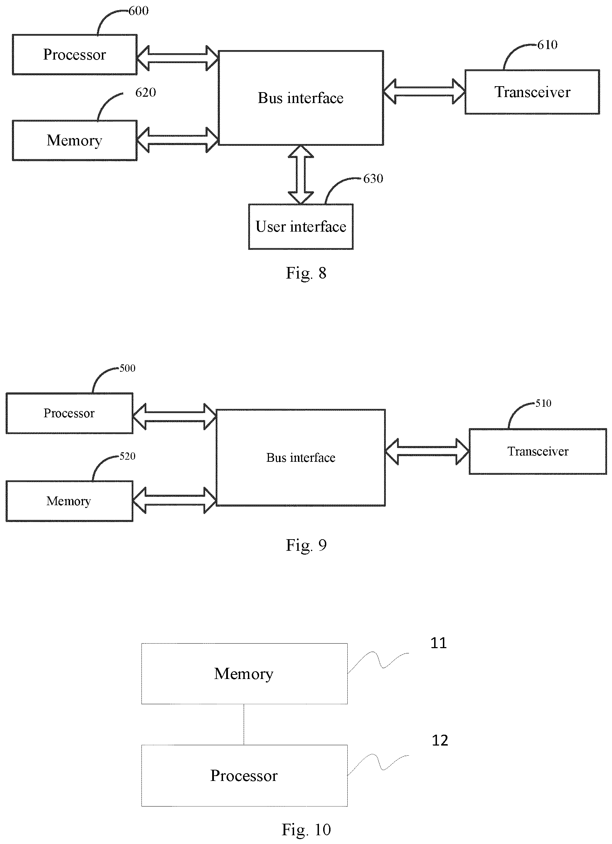

On the terminal side, referring to Fig. 8, an information transmission apparatus provided by an embodiment of the disclosure includes:
a memory 620 configured to store program instructions;
a processor 600 configured to invoke the program instructions stored in the memory, and in accordance with the obtained program, perform the process of:
   recording information related to a radio link problem after a terminal is successfully handed over to a target cell; and
   reporting the information related to the radio link problem to a network side.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the information related to the radio link problem is recorded in response to without actual occurrence of RLF.

In some embodiments, the information related to the radio link problem is recorded only within preset time after the terminal is handed over to the target cell.

In some embodiments, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem when receiving an request issued by the network side, where the information related to the radio link problem includes source cell information before the terminal is handed over to the target cell.

A transceiver 610 is configured to receive and send the data under the control of the processor 600.

Here, in Fig. 8, the bus architecture may include any numbers of interconnected buses and bridges, and specifically link various circuits of one or more processors represented by the processor 600 and the memory represented by the memory 620. The bus architecture may further link various other circuits such as peripheral device, voltage regulator and power management circuit, which are all well known in the art and thus will not be further described again herein. The bus interface provides an interface. The transceiver 610 may be a plurality of elements, i.e., include a transmitter and a receiver, and provide the units for communicating with various other devices over the transmission media. For different user equipments, the user interface 630 may also be the interface capable of inter-connecting or exter-connecting with the required devices, and the connected devices include but not limited to keypad, display, loudspeaker, microphone, joystick and the like.

The processor 600 is responsible for managing the bus architecture and general processing, and the memory 620 may store the data used by the processor 600 when performing the operations.

In some embodiments, the processor 800 may be Central Processing Unit (CPU), Application Specific Integrated Circuit (ASIC), Field-Programmable Gate Array (FPGA) or Complex Programmable Logic Device (CPLD).

The processor in this apparatus embodiment may implement all the processes mentioned in the corresponding method embodiment on the terminal side described above, which will not be repeated here.

On the network side, referring to Fig. 9, for example, in a target cell, an information transmission apparatus provided by an embodiment of the disclosure includes:
a memory 520 configured to store program instructions; and
a processor 500 configured to invoke the program instructions stored in the memory, and in accordance with the obtained program, perform the process of:
   receiving information related to a radio link problem reported by a terminal, where the information related to the radio link problem is recorded by the terminal after being successfully handed over to a target cell; and
   sending the information related to the radio link problem to a source cell before cell handover of the terminal, for the source cell to adjust cell handover parameters.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

The transceiver 510 is configured to receive and send the data under the control of the processor 500.

Here, in Fig.9, the bus architecture may include any numbers of interconnected buses and bridges, and specifically link various circuits of one or more processors represented by the processor 500 and the memory represented by the memory 520. The bus architecture may further link various other circuits such as peripheral device, voltage regulator and power management circuit, which are all well known in the art and thus will not be further described again herein. The bus interface provides an interface. The transceiver 510 may be a plurality of elements, i.e., include a transmitter and a receiver, and provide the units for communicating with various other devices over the transmission media. The processor 500 is responsible for managing the bus architecture and general processing, and the memory 520 may store the data used by the processor 500 when performing the operations.

The processor 500 may be CPU, ASIC, FPGA or CPLD.

The processor in this apparatus embodiment may implement all the processes mentioned in the corresponding method embodiment on the network side described above, which will not be repeated here.

On the network side, referring to Fig. 10, for example, in a source cell, an information transmission apparatus provided by an embodiment of the disclosure includes:
a memory 11 configured to store program instructions; and
a processor 12 configured to invoke the program instructions stored in the memory, and in accordance with the obtained program, perform the process of:
   receiving information related to a radio link problem reported by a terminal, where the information related to the radio link problem is recorded by the terminal after being successfully handed over to a target cell; and
   adjusting cell handover parameters by using the information related to the radio link problem.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the processor 12 is further configured to:
send the information related to the radio link problem to a source cell before cell handover of the terminal, for the source cell to adjust cell handover parameters.

It should be noted that the apparatus on the network side provided by embodiments of the disclosure may be used as a network apparatus of the target cell or a network apparatus of the source cell.

The processor in this apparatus embodiment may implement all the processes mentioned in the corresponding method embodiment on the network side described above, which will not be repeated here.

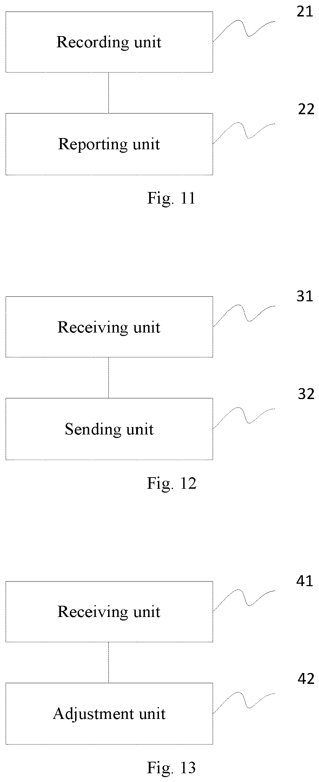

On the terminal side, referring to Fig. 11, another information transmission apparatus provided by an embodiment of the disclosure includes:
a recording unit 21 configured to record information related to a radio link problem after a terminal is successfully handed over to a target cell; and
a reporting unit 22 configured to report the information related to the radio link problem to a network side.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

In some embodiments, the information related to the radio link problem is recorded in response to without actual occurrence of RLF.

In some embodiments, the information related to the radio link problem is recorded only within preset time after the terminal is handed over to the target cell.

In some embodiments, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem when receiving an request issued by the network side, where the information related to the radio link problem includes source cell information before the terminal is handed over to the target cell.

The units in this apparatus embodiment may implement all the processes mentioned in the corresponding method embodiment on the terminal side described above, which will not be repeated here.

On the network side, referring to Fig. 12, another information transmission apparatus provided by an embodiment of the disclosure includes:
a receiving unit 31 configured to receive information related to a radio link problem reported by a terminal, where the information related to the radio link problem is recorded by the terminal after being successfully handed over to a target cell; and
a sending unit 32 configured to send the information related to the radio link problem to a source cell before cell handover of the terminal, for the source cell to adjust cell handover parameters.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

The units in this apparatus embodiment may implement all the processes mentioned in the corresponding method embodiment on the network side described above, which will not be repeated here.

On the network side, referring to Fig. 13, another information transmission apparatus provided by an embodiment of the disclosure includes:
a receiving unit 41 configured to receive information related to a radio link problem reported by a terminal, where the information related to the radio link problem is recorded by the terminal after being successfully handed over to a target cell; and
an adjustment unit 42 configured to adjust cell handover parameters by using the information related to the radio link problem.

In some embodiments, the apparatus further includes:
a sending unit 32 configured to send the information related to the radio link problem to a source cell before cell handover of the terminal, for the source cell to adjust cell handover parameters.

That is to say, the information transmission apparatus provided by the embodiment of the disclosure may be used as a network side apparatus of the current cell of the terminal, or as a network side apparatus of the source cell of the terminal.

In some embodiments, the information related to the radio link problem includes at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

The units in this apparatus embodiment may implement all the processes mentioned in the corresponding method embodiment on the network side described above, which will not be repeated here.

It should be noted that the division of units in embodiments of the disclosure is illustrative, and is merely a kind of logical function division, and there may be other division methods in actual implementations. In addition, the functional units in each embodiment of the disclosure may be integrated into one processing unit, or each unit may exist alone physically, or two or more units may be integrated into one unit. The above-mentioned integrated units can be implemented in the form of hardware, or can be implemented in the form of software functional units.

When the integrated unit is implemented in the form of software functional unit and sold or used as an independent product, it may be stored in a computer readable storage medium. Based on such understanding, the technical solution of the disclosure essentially or a part that contributes to the prior art or all or a part of the technical solution may be embodied in the form of software product. The computer software product is stored in a storage medium, and includes several instructions used to enable a computer device (which may be a personal computer, server, or network device, etc.) or a processor to perform all or some of the steps of the methods of various embodiments of the disclosure. The above-mentioned storage medium includes: USB flash drive, mobile hard disk, Read-Only Memory (ROM), Random Access Memory (RAM), magnetic disk or compact disc or various media that can store the program codes.

An embodiment of the disclosure provides a computing device, which may be a desktop computer, a portable computer, a smart phone, a tablet computer, a PDA, etc. The computing device may include a CPU, a memory, input/output devices, etc. The input device may include a keyboard, a mouse, a touch screen, etc., and the output device may include a display device such as Liquid Crystal Display (LCD), Cathode Ray Tube (CRT), etc.

The memory may include a Read-Only Memory (ROM) and a Random Access Memory (RAM), and provide the program instructions and data stored in the memory to the processor. In an embodiment of the disclosure, the memory may be used to store the program of any one of the methods provided by embodiments of the disclosure.

The processor invokes the program instructions stored in the memory and is configured to perform any one of the methods provided by embodiments of the disclosure in accordance with the obtained program instructions.

An embodiment of the disclosure provides a computer storage medium for storing the computer program instructions used by the apparatuses provided by embodiments of the disclosure described above, where the computer storage medium contains the program for performing any one of the methods provided by embodiments of the disclosure described above.

The computer storage medium may be any available medium or data storage device accessible to the computer, including but not limited to: magnetic memory (e.g., floppy disk, hard disk, magnetic tape, Magneto-Optical disc (MO), etc.), optical memory (e.g., Compact Disc (CD), Digital Video Disc (DVD), Blu-ray Disc (BD), High-definition Versatile Disc (HVD), etc.), and semiconductor memory (e.g., ROM, Erasable Programmable Read-Only Memory (EPROM), Electrically Erasable Programmable Read Only Memory (EEPROM), NAND FLASH (NF), Solid State Disk/Solid State Drive (SSD)), etc.

The methods provided by embodiments of the disclosure may be applied to the terminal devices, and may also be applied to the network devices.

Here, the terminal device may also referred to as User Equipment ("UE" for short), Mobile Station ("MS" for short), Mobile Terminal ("MT" for short), etc. In some embodiments, the terminal may has the ability of communicating with one or more core networks via the Radio Access Network (RAN). For example, the terminal may be a mobile telephone (or called "cellular" telephone), or a computer with the mobile property. For example, the terminal may also be a portable, pocket, handheld, computer built-in or vehicle-carried mobile device.

The network device may be a base station (e.g., access point), which means the device in the access network communicating with the wireless terminal via one or more sectors over the air interface. The base station may be used to perform the inter-conversion between the received air frame and the IP packet, and used as the router between the wireless terminal and the rest of the access network, where the rest of the access network may include Internet Protocol (IP) networks. The base station may further coordinate the attribute management of the air interface. For example, the base station may be a BTS in the GSM or CDMA, or a NodeB in the WCDMA, or an evolutional Node B (NodeB or eNB or e-NodeB) in the LTE, or a gNB in the 5G system, etc., which is not limited in embodiments of the disclosure.

The processing flows of the above methods may be implemented by a software program, which may be stored in a storage medium. When the stored software program is invoked, the above method steps are performed.

In summary, in embodiments of the disclosure, after the UE is successfully handed over to the target cell, the possible problems related to the radio link are recorded and reported to the network side.

The possible problems related to the radio link include:
the switch-on time of a failure timer (for example, T310) of the radio link;
the number of times reported by a failure counter (for example, N310) of the radio link;
the switch-on time and a reason for suspension of a handover measurement timer (for example, T312) related to the radio link; etc.

The information related to the radio link problem is recorded in response to without actual occurrence of RLF.

These possible problems related to the radio link are recorded only within a certain period of time after the UE is handed over to the target network side (for example, starting a timer), and there is no need to record the problems related to the radio link that occur after the timer expires.

The reporting method may include:
the UE sends the record of the problems related to the radio link directly through uplink signaling;
the UE sends an available indication in the uplink signaling, and then reports the specific record of the problems related to the radio link after the network sends a request; and at this time, the content reported by the UE may need to carry the information of the source cell before the handover; and
after receiving the record of the problems related to the radio link, the network side sends it to the source cell before the handover of the UE, for the source cell to adjust the handover parameters.

In the solution for optimizing the handover parameters provided by embodiments of the disclosure, the UE records the radio link related problems that occurred and reports them to the network side after the UE is successfully handed over to a target cell, so that the network side can further enhance the robustness on the basis of existing SON handover optimization such as too early handover.

It should be understood by those skilled in the art that embodiments of the disclosure can be provided as methods, systems and computer program products. Thus the disclosure can take the form of hardware embodiments alone, software embodiments alone, or embodiments combining the software and hardware aspects. Also the disclosure can take the form of computer program products implemented on one or more computer usable storage mediums (including but not limited to magnetic disk memories, optical memories and the like) containing computer usable program codes therein.

The disclosure is described by reference to the flow charts and/or the block diagrams of the methods, the devices (systems) and the computer program products according to embodiments of the disclosure. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the disclosure without departing from the spirit and scope of the disclosure. Thus the disclosure is also intended to encompass these modifications and variations to the disclosure as long as these modifications and variations come into the scope of the claims of the disclosure and their equivalents.

## Claims

1. An information transmission method, comprising:
recording information related to a radio link problem after a terminal is successfully handed over to a target cell; and
reporting the information related to the radio link problem to a network side.

2. The method according to claim 1, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

3. The method according to claim 1, the information related to the radio link problem is recorded in response to without actual occurrence of Radio Link Failure, RLF.

4. The method according to claim 1, the information related to the radio link problem is recorded only within preset time after the terminal is handed over to the target cell.

5. The method according to claim 1, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem in response to receiving an request issued by the network side, wherein the information related to the radio link problem comprises source cell information before the terminal is handed over to the target cell.

6. An information transmission method, comprising:
receiving information related to a radio link problem reported by a terminal, wherein the information related to the radio link problem is recorded by the terminal after being successfully handed over to a target cell; and
sending the information related to the radio link problem to a source cell before cell handover of the terminal, for the source cell to adjust cell handover parameters.

7. The method according to claim 6, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

8. An information transmission method, comprising:
receiving information related to a radio link problem reported by a terminal, wherein the information related to the radio link problem is recorded by the terminal after being successfully handed over to a target cell; and
adjusting cell handover parameters by using the information related to the radio link problem.

9. The method according to claim 8, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

10. An information transmission apparatus, comprising:
a memory, configured to store program instructions; and
a processor, configured to invoke the program instructions stored in the memory, and perform, according to an obtained program, the process of:
recording information related to a radio link problem after a terminal is successfully handed over to a target cell; and
reporting the information related to the radio link problem to a network side.

11. The apparatus according to claim 10, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

12. The apparatus according to claim 10, the information related to the radio link problem is recorded in response to without actual occurrence of Radio Link Failure, RLF.

13. The apparatus according to claim 10, the information related to the radio link problem is recorded only within preset time after the terminal is handed over to the target cell.

14. The apparatus according to claim 10, the information related to the radio link problem is reported in one of following ways:
in a first way: sending the information related to the radio link problem directly through uplink signaling; or
in a second way: sending an available indication of the information related to the radio link problem in uplink signaling, and reporting the information related to the radio link problem in response to receiving an request issued by the network side, wherein the information related to the radio link problem comprises source cell information before the terminal is handed over to the target cell.

15. An information transmission apparatus, comprising:
a memory, configured to store program instructions; and
a processor, configured to invoke the program instructions stored in the memory, and perform, according to an obtained program, the process of:
receiving information related to a radio link problem reported by a terminal, wherein the information related to the radio link problem is recorded by the terminal after being successfully handed over to a target cell; and
sending the information related to the radio link problem to a source cell before cell handover of the terminal, for the source cell to adjust cell handover parameters.

16. The apparatus according to claim 15, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

17. An information transmission apparatus, comprising:
a memory, configured to store program instructions; and
a processor configured to invoke the program instructions stored in the memory, and perform, according to an obtained program, the process of:
receiving information related to a radio link problem reported by a terminal, wherein the information related to the radio link problem is recorded by the terminal after being successfully handed over to a target cell; and
adjusting cell handover parameters by using the information related to the radio link problem.

18. The apparatus according to claim 17, the information related to the radio link problem comprises at least one or a combination of:
switch-on time of a failure timer of the radio link;
a count value of a failure counter of the radio link;
switch-on time of a handover measurement timer related to the radio link; or
a reason for suspension of the handover measurement timer related to the radio link.

19. The apparatus according to claim 17 or 18, the processor is further configured to:
send the information related to the radio link problem to a source cell before cell handover of the terminal, for the source cell to adjust cell handover parameters.

20. An information transmission apparatus, comprising:
a recording unit, configured to record information related to a radio link problem after a terminal is successfully handed over to a target cell; and
a reporting unit, configured to report the information related to the radio link problem to a network side.

21. An information transmission apparatus, comprising:
a receiving unit, configured to receive information related to a radio link problem reported by a terminal, wherein the information related to the radio link problem is recorded by the terminal after being successfully handed over to a target cell; and
a sending unit, configured to send the information related to the radio link problem to a source cell before cell handover of the terminal, for the source cell to adjust cell handover parameters.

22. An information transmission apparatus, comprising:
a receiving unit, configured to receive information related to a radio link problem reported by a terminal, wherein the information related to the radio link problem is recorded by the terminal after being successfully handed over to a target cell; and
an adjustment unit, configured to adjust cell handover parameters by using the information related to the radio link problem.

23. The apparatus according to claim 22, the apparatus further comprises:
a sending unit, configured to send the information related to the radio link problem to a source cell before cell handover of the terminal, for the source cell to adjust cell handover parameters.

24. A computer storage medium storing a computer program thereon, wherein the program, when executed by a processor, implements the method of any one of claims 1-9.
